# EUROPEAN PATENT SPECIFICATION

(11) **EP 3 778 385 B1**
(45) Date of publication and mention of the grant of the patent: **06.04.2022**
(21) Application number: 19191892.9
(22) Date of filing: 15.08.2019
(51) Int. Cl.: B64C 11/48, F02K 3/072, B63H 5/10

(54) **HYBRID ENGINE SYSTEM FOR LIGHT AIRCRAFT**
HYBRIDMOTORSYSTEM FÜR LEICHTFLUGZEUGE
SYSTÈME DE MOTEUR HYBRIDE POUR AÉRONEF LÉGER

(43) Date of publication of application: 17.02.2021
(73) Proprietor: C.A.I. Confident Aircraft Industry S.R.L., 80018 Mugnano di Napoli (IT)
(72) Inventor: LICCARDO, Domenico, 80016 MARANO DI NAPOLI (NA) (IT); LICCARDO, Giuseppe, 80012 Calvizzano (NA) (IT); LICCARDO, Rosario, 80018 Mugnano Di Napoli (NA) (IT)
(74) Representative: De Tullio, Michele Elio

(56) References cited:
- EP-A1- 2 202 143
- GB-A- 2 478 611
- JP-A- 2002 234 491
- JP-A- 2011 020 579
- US-A1- 2013 231 208

## Description

### Field of the invention

The present invention relates to a motorization system for aircraft. In particular, the present invention relates to a hybrid motorization system for light and certified aircraft.

### Description of the prior art

The counter-rotating propeller system, also known as coaxial counter-rotating propeller system, uses the power of a piston or turboprop engine, for putting in rotation two propellers arranged along the same axle, but made to turn with opposite rotation directions.

Counter-rotating propellers are commonly used in some transmission systems in the nautical field, in particular in medium and large pleasure boats. The two propellers are installed one behind the other, and the power is transferred to them from the engine by a planetary and satellite gear system or toothed wheels.

The European patent application published as EP 2202143 discloses a propulsion system for boats or ships of all kinds wherein, in addition to a main propeller, a secondary propeller rotates contrary to the main propeller, in order to optimize the propulsion and eliminate cavitations. Thus, on one hand, the main engine of the ship can move both contra-rotating propellers simultaneously, which in determined circumstances can be supported by an electric engine and, on the other hand, even the propulsion can be carried out exclusively by said electric engine, when for different reasons it is necessary or advisable to reduce the ship's acoustic contamination to a maximum.

In the aeronautics sector, in the case of low-speed flight, the rotation of the blades of a propeller causes a significant amount of air mass to flow through the propeller disk, which is transformed into a tangential or rotational air flow. The energy of such aerodynamic flow tangentially to the direction of motion is totally wasted in the single-helix scheme and leads to a reduction of propeller efficiency.

In order to use a portion of this energy, a second propeller placed behind the first one can extract energy also from the disturbed air flow that invests it. A system with counter-rotating propellers has no rotational air flows at its outlet and creates a uniform thrust through the propeller disk causing fewer losses and producing a performance increase.

Furthermore, the tangential air flow generated by a propeller, if present, causes maneuverability problems at low speeds because, if hitting the vertical stabilizers, that is drift and rudder, it generates a force that tends to make the aircraft yaw towards right or left depending on the direction of rotation of the blades.

The design with counter-rotating propellers also serves to counteract the asymmetrical yaw moment (P-factor) that is generated in propeller-driven aircraft when they take on a structure not perfectly horizontal as it happens in certain flight conditions with great attack angle or in some carriage configurations during traveling on the ground.

Some counter-rotating systems are designed to be used more at take-off for obtaining the maximum thrust and efficiency in those conditions. Once terminated maneuver one of the propellers is disconnected during the cruise flight in order to increase flight autonomy.

It has been verified that the counter-rotating propeller systems are between 6% and 16% more efficient than systems with only one conventional propeller.

However, the solution of the counter-rotating propellers is very noisy with increases of noise in axle, forward and backward, up to 30 dB and along tangential directions, of 10 dB. Most additional noise can be measured in the field of high frequencies.

A solution to this drawback due to the noise caused by the counter-rotating propellers, is to enclose the propellers in a cowling tubing the same.

Another solution is the realization of two propellers with a different number of blades between front and rear ones, as for example, four blades for the front propeller and five for the one placed behind the first one.

Furthermore, another disadvantage in the use of counter-rotating propellers is the major mechanical complexity of the system and the consequent onerous costs of the relative maintenance.

The object of the present invention is therefore to solve the aforementioned drawbacks in order to provide a system of counter-rotating propellers that is at the same time effective and not noisy.

### Summary of the invention

The present invention refers to one as indicated in the claim 1.

The Applicant of the present invention has in fact surprisingly found that the technical problem mentioned above can be solved effectively and reliably through a system that includes at least two counter-rotating propellers, independent of each other, in which the main propeller is driven by a primary thermal engine and the secondary propeller is driven by a secondary electric motor; wherein said thermal primary engine and said secondary electric motor are located in such a way their respective rotation axles are arranged in parallel one each other, in which the system also comprises a traction belt capable of transmitting the motion to said secondary propeller.

In this way it is possible to exploit in various ways the fact that the two propellers are arranged to be operated by two different engines.

It is in fact possible to improve the performance during take-off, landing, or for performing re-entry maneuvers or at full power, as well as to have an increase in safety. In fact, in the event of failure of the primary thermal engine, it will be possible to count on the thrust of the secondary electric motor that can also be used as a current generator for recharging auxiliary batteries.

Furthermore, it is possible to obtain numerous advantages: for example, the cancellation of the gyroscopic moment, as the two propellers produce two equal gyroscopic moments but with opposite signs that cancel each other out with the relative advantages for piloting. The overall diameter of the double propellers is also reduced, with the possibility of installing a landing gear smaller, with a noticeable decrease in general aerodynamic drag and fuel. Finally, it is possible to optimize consumption and environmental impact by using the electric motor in normal flight conditions, taking always under control the state of charge of the battery.

Furthermore, the traction belt is very light compared to gear drives, it being able to transmit very high powers with the advantage of being silent and not requiring any lubrication.

According to a preferred embodiment, said secondary electric motor is connected to said primary thermal engine by means of a plate and pins.

Said main propeller is connected to an interface flange of said thermal engine so as to allow said main propeller to rotate in an autonomous way around a first rotation axle.

According to a preferred embodiment, said main propeller is connected to said flange with pins and locked with nuts.

The system of the present invention also comprises a pair of front and rear tapered roller bearings, arranged along the rotation axle of the secondary propeller.

In this way, said secondary propeller is allowed to rotate in such an autonomous way, independent on the rotation of said main propeller.

According to a preferred embodiment, the system of the present invention also includes a locking ring adapted to regulate the recording of said bearings.

According to a preferred embodiment, the system of the present invention also comprises a washer and an anti-unscrewing washer which engage with said ring for its adjustment and tightening.

According to a preferred embodiment, the system of the present invention further comprises a thread provided with a longitudinal milling adapted to accommodate itself in an internal tongue of said washer and said anti-unscrewing washer.

In this way, the fixing is done by bending the external tabs of the washer.

According to a preferred embodiment, said traction belt connects one toothed pulley of said secondary propeller to a toothed pulley in turn connected to said electric motor.

According to a preferred embodiment, the system of the present invention also comprises a register adapted to regulate the tension of said traction belt.

According to a preferred embodiment, the system of the present invention also includes a control of the electric motor, so that the secondary propeller do not exceed 2600 rpm.

According to a preferred embodiment, the reduction ratio between said toothed pulley of said secondary electric motor and said toothed pulley of said secondary propeller can be optimized as a function of the number of revolutions of said secondary electric motor.

In this way it is possible to have four operating modes, each with a related advantage as indicated below.

In a first embodiment, the reduction ratio between said toothed pulley of said secondary electric motor and said toothed pulley of said secondary propeller is set so as to have an increase in power in those conditions in which a short take-off is desired, or when a condition of emergency occurs with a maximum indicative operating time of about 60 seconds, every 30 minutes of charging.

In a second embodiment, the reduction ratio between said toothed pulley of said secondary electric motor and said toothed pulley of said secondary propeller is set so as to have an electric motor that generates to the secondary propeller a thrust sufficient to guarantee the choice of a safe landing field, by assuming a maximum continuous operation of approximately 15 minutes.

In a third embodiment, the reduction ratio between said toothed pulley of said secondary electric motor and said toothed pulley of said secondary propeller is set so that the electric motor can perform the current generator functions for recharging its own batteries, by using both the aerodynamic flow generated during the "descent and/or navigation" phase and the one from the front primary propeller, which in turn rotates the secondary propeller connected to the electric motor which in this condition will become a wind generator.

In a fourth embodiment, the system of the present invention also includes an element, such as a dedicated throttle, capable of managing the power delivery of said secondary electric motor in certain emergency situations so that said primary thermal engine works substantially always at constant power in its optimal functioning conditions.

In fact, in this way, the thermal engine always works at constant power in its own optimal functioning conditions, thus reducing consumption and emissions. At the same time, the electric motor supplies the energy required for accelerations, slope changes and in emergency situations.

According to a preferred embodiment, the control system is provided with appropriate internal download memory capable of recording all data relating to the system life.

According to a preferred embodiment, the system of the present invention is also provided with a suitable actuator for partitioning the energy supply required between different forms of energy present (chemical, mechanical, electrical), their storage and conversion between one form and another.

In this way, the presence of two or more energy sources is exploited, by following energy efficiency optimization criteria.

Furthermore, in the event of an excess energy in the thermal engine, generated by the alternator, the same is reused to charge the batteries, beyond what is possible to draw from the distribution network.

According to a preferred embodiment, the batteries are recharged also due to the kinetic energy recovered from the secondary propeller during the phase of descent, which is activated in an auto-rotation mode, thus increasing the overall efficiency of the aircraft.

According to a preferred embodiment, the system of the present invention also includes a front oil seal and a rear oil seal, each placed in correspondence, respectively, to one end of said secondary propeller.

In this way, said secondary propeller is made tight.

According to a preferred embodiment, the system of the present invention also includes a control panel capable of displaying information relating to the system operating mode.

According to a preferred embodiment, said control panel is able to display any anomalies in the system with a diagnosis on a control panel when the ignition is switched on, the state of charge and the relative thermometer for the control of the battery pack temperature, the current operating mode, the percentage of the residual autonomy of the electric motor, etc.

Other advantages and features of the hybrid system of the present invention will be evident from the following detailed description of some forms of embodiment, presented by way of a non-limiting example with particular reference to the tables and figures attached and to the relative references described, in which:
- Figure 1 represents an axonometric overview of an embodiment of a two-propeller system according to the present invention;
- Figure 2 represents an exploded view of the two-propeller system of Figure 1;
- Figure 3 represents a side view of the two-propeller system of Figure 1;
- Figure 4 represents a detail of Figure 3.

### Detailed description of the invention

The following detailed description refers to a particular embodiment of the two-propeller hybrid system of the present invention, without limiting its content.

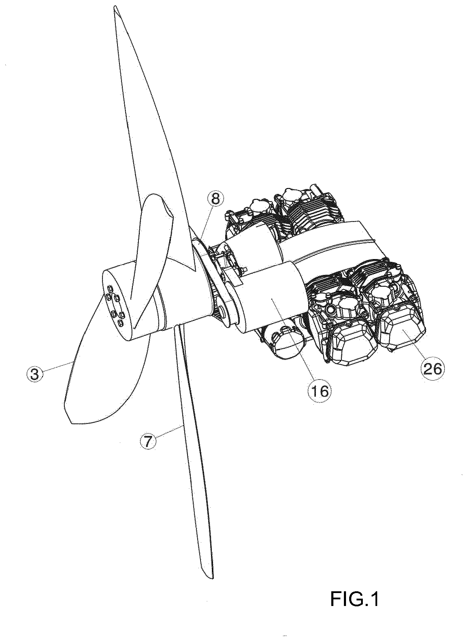

Figure 1 shows an overall view of the two-propeller hybrid system 3,7 and of two engines 16, 26.

For the realization of the mechanical parts and the central body of the two propellers Aluminum Ergal 7075 and Titanium Ti6AI4V were used, whereas for the blades of the two counter-rotating propellers 3,7 (with the possibility of being fitted onto the central body of the propeller so as to make the pitch variable according to the needs) a composite was used; such materials are able to provide at the same time a maximum robustness and strength.

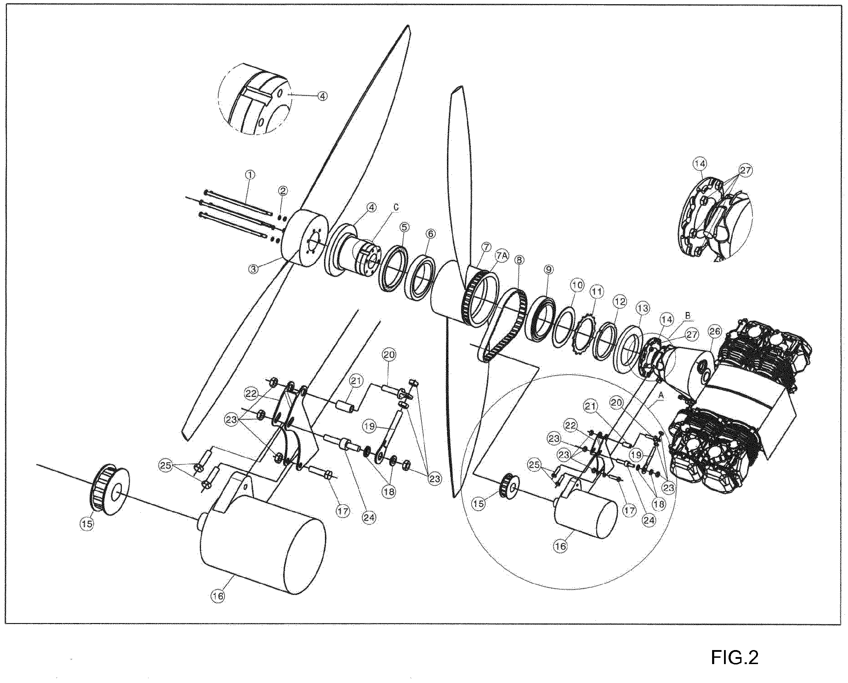

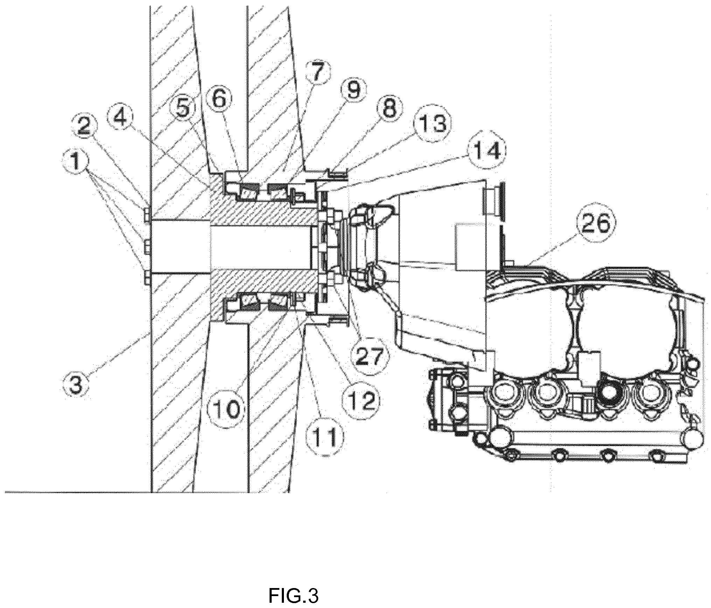

With particular reference to Figures 2 (exploded view) and 3 (side view), the main propeller 3 is shown which is installed on the rotation axle 4 and is directly connected to the interface flange 14 of the thermal engine 26 through pins 1 and flat washers 2 that, due to their width, are able to distribute the tightening load on a larger surface than that provided by the bolt. This aspect is particularly important when the element to be fixed is strongly urged and needs to spread the effort over a larger area in order to protect the surface itself. The whole is blocked with the nuts 27. Such installation allows the main propeller 3 to work independently, as is shown in the section of Figure 3.

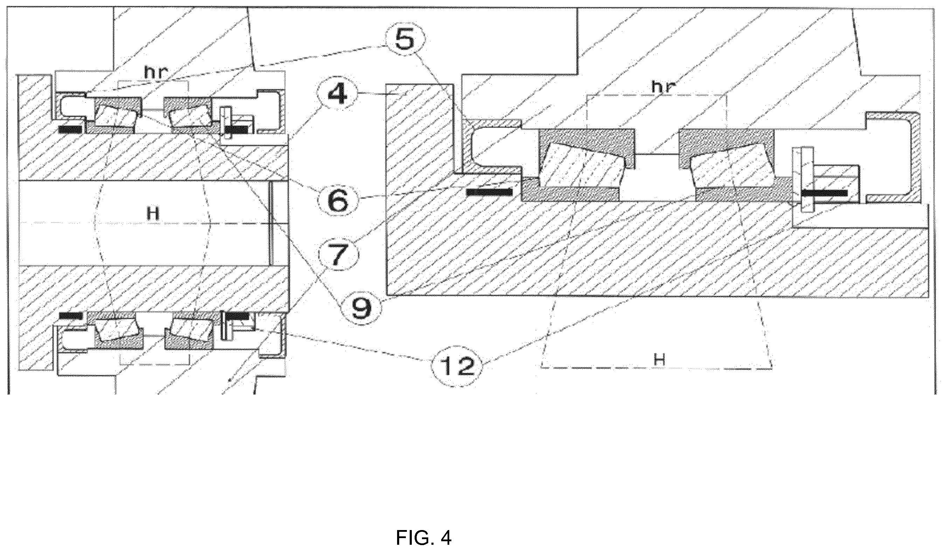

The counter-rotating secondary propeller system 7 is driven by the electric motor 16 along the axle 4 on which the front 6 and rear 9 tapered bearings are installed to allow it to rotate independently. The front 6 and rear 9 tapered bearings are chosen according to the loads to which they must react and based on the space available, and will be mounted with an "O" shape as shown in detail in Figure 4. This installation will give a support base on the internal shaft 4 able to withstand the strong stresses due to overturning of the external shaft where the secondary propeller 7 is housed.

The adjustment of the bearings 6 and 9 takes place through the locking ring 12. In the end portion of the rotation axle 4, shown in detail C of Figure 2, a thread with a longitudinal milling is shown which accommodates the internal tongue of the washer 10 and of the anti-unscrewing washer 11; the block of the ring 12 being made by bending the outer tabs of the washer 11. In order to make the secondary propeller 7 watertight, in correspondence with the two ends, the front oil seal 5 and the rear oil seal 13 are also mounted.

The secondary propeller 7 is driven by the toothed belt 8, which connects the toothed pulley 7A of the secondary propeller 7 to the toothed pulley 15, in turn connected to the electric motor 16. The electric motor unit 16 is connected to the thermal engine 26 through the plate 22 and the pins 25. The electric motor 16 is connected to the plate 22 through the lower fixing pin 17 and the upper fixing pin 24, on which bronze bushings 18 are installed, which allow the housing of the belt-tension adjuster 19. The latter is fixed to the eye pin 20, which allows its locking by means of the spacer bush 21, while the nuts 23 are used for locking the pins 17, 24, 19, 20. The tension of the toothed belt 8 is carried out through the register 19 which in turn comes locked by the nuts 23.

All the elements that constitute the system of the present invention are chosen, in order to provide the maximum lightness possible.

In the exemplary embodiment described herein, although not limiting, the electric motor 16 has an indicative power of 15 Kw, a maximum voltage supply of 48 Volts (or possibly greater, compatibly with the system security), 7800 rpm at maximum power, a 14 mm diameter output shaft with 5x5x20 mm keyway, one protrusion of the shaft from the 30 mm motor wire, a maximum indicative diameter of 120 mm, and a maximum indicative length of 150 mm.

The batteries are as light as possible and guarantee 5 minutes of operation 20 of the engine at maximum power. The connection of the battery pack is made with a quick connector.

The reduction ratio between the toothed pulley 15 of the electric motor 16, and the toothed pulley 7A of the secondary propeller 7 can be optimized according to the number of electric motor revolutions. With a maximum rotation of the secondary propeller of 2600 rpm, four operating modes can be obtained.

In the first operating mode, the reduction ratio between the pulley toothed 15 of the secondary electric motor 16 and the toothed pulley 7A of the secondary propeller 7 allows a power increase in those conditions in which a short take-off or an emergency condition is required, with a time of maximum indicative operation of about 60 seconds, about every 30 minutes of charging. In this first operating mode, the control of the secondary electric engine 16 can be of the simple on/off type with micro-switch for enabling the accelerator end of the thermal engine 26 to the stroke end, or a push button activation with a pre-programmed power output ramp in the electronic control 10 of the secondary electric motor 16. The system is also supplied with a LED on the control panel that lights up with a certain color, for example, yellow, at the reaching of the maximum continuous time and becoming of another color, for example red, when the maximum usage time is reached.

In the second embodiment, the reduction ratio between the toothed pulley 15 of the secondary electric motor 16 and the toothed pulley 7A of the secondary propeller 7 allows to have a secondary electric motor 16 which generates to the secondary propeller 7 a thrust sufficient to guarantee the choice of a safe landing field, by assuming a maximum continuous operation of approximately 15 minutes.

In this second embodiment, the control of the secondary electric motor 16 is the same on/off of the first embodiment as seen above and the power of the secondary electric motor 16 is modulated through a potentiometer connected to the accelerator of the thermal primary engine 26.

In the third embodiment, the reduction ratio between the toothed pulley 15 of the secondary electric motor 16 and the toothed pulley 7A of the secondary propeller 7 allows the electric secondary motor 16 to perform the functions of a current generator for recharging its own batteries, by using both the aerodynamic flow generated in the "descent and/or navigation" phase and that from the main propeller 3, which in turn rotates the secondary propeller 7 connected to the secondary electric motor 16 which in this condition will become a wind generator.

In the fourth embodiment, the system of the present invention also includes an element, such as a dedicated throttle, capable of managing the power supply of the secondary electric motor 16 in certain emergency situations so that the primary thermal engine 26 works substantially always at constant power in its optimal functioning conditions, thus reducing consumption and emissions. At the same time, the secondary electric motor 16 provides the energy needed for accelerations, changes in slope and in emergency situations.

Therefore, the two-propeller system 3, 7 of the present invention provides numerous advantages summarized below:
1) better take-off or full power output;
2) increased safety: in the event of failure of the primary thermal engine 26 it is however is possible to count on the thrust of the secondary electric motor 16;
3) the same secondary electric motor 16 can be used as a current generator for the recharge of the auxiliary batteries;
4) assistance with landing and take-off in the event of malfunction of thermal primary engine 26 for performing return operations;
5) cancellation of gyroscopic moment;
6) decrease in the overall diameter of the propellers 3, 7 as being double, with the possibility of installing a smaller landing gear with a noticeable decrease in general aerodynamic resistance and simultaneous reduction in consumption;
7) optimization of consumptions and environmental impact, by using the secondary electric motor (16) in normal flight conditions, changes in slope where more power is required, always keeping under control the charging condition of the battery.

Obviously, to the experts in the field many changes and variants will be evident of the preferred embodiment previously described, still remaining within the scope of the invention.

Therefore, the present invention is not limited to the preferred described embodiments, shown only for exemplary and non limitative purposes, but it is defined by the following claims.

## Claims

1. System comprising at least two counter-rotating propellers (3, 7) independent one another, in which:
- the main propeller (3) is installed on a rotation axle (4) and is directly connected to an interface flange (14) of a thermal primary engine (26), being actuated by said thermal primary engine (26) in order to allow the rotation of said main propeller (3) in an autonomous way;
- the secondary propeller (7) is actuated by a secondary electric motor (16) through a pair of front (6) and rear (9) tapered roller bearings placed along the rotation axle (4) of said secondary propeller (7) in order to allow the rotation of said secondary propeller (7) in an autonomous way independent of said rotation of the main propeller (3) wherein said thermal primary engine (26) and said secondary electric motor (16) are arranged parallel one each other, and wherein the system also includes a traction belt (8) able to transmit the motion to said secondary propeller (7).

2. System according to claim 1, in which said secondary electric motor (16) is connected to said thermal primary engine (26) through a plate (22) and pins (25).

3. System according to claim 1 or 2, also including a locking ring (12) able to control the setting of said bearings (6, 9).

4. System according to any of previous claims, in which said traction belt (8) connects a toothed pulley (7A) of said secondary propeller (7) with a toothed pulley (15), which in turn is connected with said electric motor (16).

5. System according to claim 4, in which the reduction ratio between said toothed pulley (15) of said secondary electric motor (16) and said toothed pulley (7A) of said secondary propeller (7) can be optimized with respect to the revolutions of said secondary electric motor (16).

6. System according to claim 4 or 5, also including a register (19) able to control the tension of said traction belt (8).

7. System according to any of previous claims, also including a front (5) and rear (13) oil washer, each respectively placed at one of the ends of said secondary propeller (7).

8. System according to any of previous claims, also including an element able to manage the power supply of said secondary electric motor (16) in determined emergency situations, so as said thermal primary engine (26) substantially works at a constant speed in its optimal functioning conditions.

## Patentansprüche

1. System mit mindestens zwei voneinander unabhängigen gegenläufigen Propellern (3, 7), bei dem
- der Hauptpropeller (3) ist auf einer Rotationsachse (4) installiert und direkt mit einem Schnittstellenflansch (14) einer primären Wärmekraftmaschine (26) verbunden, der von der primären Wärmekraftmaschine (26) angetrieben wird, um die Drehung des Hauptpropellers (3) autonom zu ermöglichen;
- der sekundäre Propeller (7) wird von einem sekundären Elektromotor (16) durch ein Paar vorderer (6) und hinterer (9) Kegelrollenlager angetrieben, die entlang der Rotationsachse (4) des sekundären Propellers (7) angeordnet sind. um die Drehung des Sekundärpropellers (7) autonom, unabhängig von der Drehung des Hauptpropellers (3) zu ermöglichen, wobei die Primärwärmekraftmaschine (26) und der sekundäre Elektromotor (16) parallel zueinander angeordnet sind, und wobei das System ferner einen Traktionsriemen (8) umfasst, der in der Lage ist, die Bewegung auf den sekundären Propeller (7) zu übertragen.

2. System nach Anspruch 1, wobei der sekundäre Elektromotor (16) mit der primären Wärmekraftmaschine (26) über eine Platte (22) und Stifte (25) verbunden ist.

3. System nach Anspruch 1 oder 2, ferner umfassend einen Sicherungsring (12), der geeignet ist, die Einstellung der Lager (6, 9) zu steuern.

4. System nach einem der vorhergehenden Ansprüche, bei dem der Traktionsriemen (8) eine Zahnriemenscheibe (7A) des sekundären Propellers (7) mit einer Zahnriemenscheibe (15) verbindet, die ihrerseits mit der Elektromotor (16) verbunden ist.

5. System nach Anspruch 4, bei dem das Untersetzungsverhältnis zwischen der Zahnriemenscheibe (15) des sekundären Elektromotors (16) und der Zahnriemenscheibe (7A) des sekundären Propellers (7) hinsichtlich der Umdrehungen des sekundären Elektromotors (16) optimiert werden kann.

6. System nach Anspruch 4 oder 5, auch ein Register (19) umfassend, das in der Lage ist, die Spannung des Traktionsriemens (8) zu steuern.

7. System nach einem der vorhergehenden Ansprüche, das auch einen vorderen (5) und hinteren (13) Ölwäscher umfasst, die jeweils an einem der Enden des sekundären Propellers (7) angeordnet sind.

8. System nach einem der vorangehenden Ansprüche, auch ein Element umfassen, das in der Lage ist, die Stromversorgung des sekundären Elektromotors (16) in bestimmten Notsituationen derart zu steuern, dass die primäre Wärmekraftmaschine (26) mit im Wesentlichen konstanter Drehzahl in seinen optimalen Betriebsbedingungen arbeitet.

## Revendications

1. Système comprenant au moins deux hélices contrarotatives (3, 7) indépendantes l'une de l'autre, dans lequel
- l'hélice principale (3) est installée sur un axe de rotation (4) et est directement reliée avec une bride d'interface (14) d'un moteur thermique primaire (26), actionnée par ledit moteur thermique primaire (26), à fin de permettre la rotation de l'hélice principale (3) de manière autonome;
- l'hélice secondaire (7) est actionnée par un moteur électrique secondaire (16) par un couple de roulements à rouleaux coniques avant (6) et arrière (9), disposés le long de l'axe de rotation (4) de ladite hélice secondaire (7) à fin de permettre la rotation de ladite hélice secondaire (7) de manière autonome, indépendamment de la rotation de l'hélice principale (3), dans lequel le moteur thermique primaire (26) et le moteur électrique secondaire (16) sont disposés parallèles les uns aux autres, et dans lequel le système comprend en outre une courroie de traction (8) capable de transmettre le mouvement à ladite hélice secondaire (7).

2. Système selon la revendication 1, dans lequel ledit moteur électrique secondaire (16) est relié audit moteur thermique primaire (26) par l'intermédiaire d'une plaque (22) et de goupilles (25).

3. Système selon les revendications 1 ou 2, comprenant en outre une bague de verrouillage (12) apte à commander le réglage desdits roulements (6, 9).

4. Système selon l'une quelconque des revendications précédentes, dans lequel ladite courroie de traction (8) relie une poulie crantée (7A) de ladite hélice secondaire (7) à une poulie crantée (15), qui à son tour est reliée audit moteur électrique (16).

5. Système selon la revendication 4, dans lequel le rapport de réduction entre ladite poulie crantée (15) dudit moteur électrique secondaire (16) et ladite poulie crantée (7A) de ladite hélice secondaire (7) peut être optimisé par rapport aux révolutions dudit moteur électrique secondaire (16).

6. Système selon la revendication 4 ou 5, comprenant également un registre (19) apte à contrôler la tension de ladite courroie de traction (8).

7. Système selon l'une quelconque des revendications précédentes, comprenant également un lave-huile avant (5) et arrière (13), placés respectivement chacun à l'une des extrémités de ladite hélice secondaire (7).

8. Système selon l'une quelconque des revendications précédentes, comprenant également un élément apte à gérer l'alimentation d'énergie dudit moteur électrique secondaire (16) dans des situations d'urgence déterminées, de sorte que ledit moteur thermique primaire (26) fonctionne sensiblement à vitesse constante dans ses conditions de fonctionnement optimal.
